# EUROPÄISCHE PATENTSCHRIFT

(11) **EP 1 701 537 B1**
(45) Veröffentlichungstag und Bekanntmachung des Hinweises auf die Patenterteilung: **23.04.2008**
(21) Anmeldenummer: 05005234.9
(22) Anmeldetag: 10.03.2005
(51) Int. Cl.: H04N 1/60

(54) **Linearisierungs- und Charakterisierungsverfahren eines bildgebenden Geräts**
Method of linearisation and characterisation of an imaging apparatus
Procédé de linéarisation et de caractérisation d'un appareil de restitution d'image

(43) Veröffentlichungstag der Anmeldung: 13.09.2006
(73) Patentinhaber: X-Rite Europe AG, 8105 Regensdorf (CH)
(72) Erfinder: Keydar, Moshe, 58337 Holon (IL); Beyer, Martin, 59192 Bergkamen (DE); Lamy, Francis, 8832 Wollerau (CH)
(74) Vertreter: Schwabe - Sandmair - Marx

(56) Entgegenhaltungen:
- US-A- 5 416 613
- US-A- 5 649 072
- US-B1- 6 441 923
- VRHEL M J ET AL: "Color printer characterization in MATLAB" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, Bd. VOL. 2 OF 3, 22. September 2002 (2002-09-22), Seiten 457-460, XP010607359 ISBN: 0-7803-7622-6
- MCCAMY C S ET AL: "A COLOR-RENDITION CHART" JOURNAL OF APPLIED PHOTOGRAPHIC ENGINEERING, SOCIETY OF PHOTOGRAPHIC SCIENTISTS AND ENGINEERS,, US, Bd. 2, Nr. 3, 21. Juni 1976 (1976-06-21), Seiten 95-99, XP000600952 ISSN: 0098-7298
- HARDEBERG J Y ET AL: "COLOR MANAGEMENT FOR COLOR FACSIMILE" PROCEEDINGS OF THE COLOR IMAGING CONFERENCE: COLOR SCIENCE, SYSTEMS AND APPLICATIONS, 1996, Seiten 108-113, XP001050321

## Beschreibung

Die Erfindung betrifft ein Verfahren zur Linearisierung und Charakterisierung eines bildgebenden RGB- oder CMYK-Geräts gemäss dem Oberbegriff des unabhängigen Anspruchs.

Die Erfindung bezieht sich auf das Umfeld der Grafikverarbeitung und insbesondere auf die in deren Arbeitsflüssen (Workflows) eingesetzten bildgebenden Geräte, speziell Drucker.

Der typische Arbeitsfluss der Grafikverarbeitung umfasst den Einsatz verschiedener bildgebender Geräte und bietet dem Benutzer die Möglichkeit, Bilder zu erzeugen, anzusehen, zu korrigieren und auszugeben, speziell zu drucken. Der Arbeitsfluss erstreckt sich üblicherweise von einem Bilderfassungsabschnitt mit Eingabegeräten wie digitalen Kameras und Scanner über einen Betrachtungsabschnitt mit Anzeigegeräten wie z.B. einem Monitor zu einem Ausgabeabschnitt mit Ausgabegeräten wie. z.B. einem Drucker. Der Benutzer strebt dabei im Ausgabeabschnitt Bilder an, die entweder dem zugrundeliegenden Original möglichst nahekommen, oder die (nach individuellen Vorstellungen) als "schön" oder "gefällig" empfunden werden.

Aufgrund der technologischen Unterschiede bei den bildgebenden Geräten (z.B. CCD, Filter, InkJet, andere) besteht die Notwendigkeit, die beteiligten Geräte vorweg auf eine gemeinsame Farbbeschreibungssprache einzurichten. Einer der wichtigsten Punkte dabei ist die Linearisierung und Charakterisierung jedes beteiligten bildgebenden Geräts.

Die Linearisierung wird meistens beim Gerätehersteller durchgeführt, benötigt spezielle Kenntnisse und ist zeitlich aufwändig. Was unter Charakterisierung zu verstehen ist, ist durch das ICC (International Color Committee) definiert: Jedem bildgebenden Gerät wird ein ICC Farbprofil zugeordnet, welches die farblichen Möglichkeiten/Beschränkungen des Geräts beschreibt.

Die Erzeugung eines ICC Profils für ein bildgebendes Gerät ist ein relativ langwieriger Prozess, der u.a.a. das Reproduzieren (z.B. Drucken) einer Farbmesstafel (Test Chart) mit dem betreffenden Gerät sowie das farbmetrische Auswerten der oft viele hundert einzelnen Testfelder der reproduzierten Farbmesstafel umfasst. Oft werden durch das ICC festgelegte Standard Farbmesstafeln verwendet, daneben werden aber auch spezielle Farbmesstafeln der Profilerzeugungssoftware-Hersteller eingesetzt. Übliche Farbmesstafeln sind z.B. die gem. 1T8.73 (928 Messfelder) und die gem. ECI2002 (1440 Messfelder). Das Arbeiten mit solch grossen Farbmesstafeln ist für den normalen (z.B. privaten) Benutzer sehr zeitaufwändig und kostspielig.

Die US-A-6,441,923 offenbart ein Verfahren zum Kalibrieren eines Druckers. Der Kalibriervorgang beginnt durch das Drucken von Kalibrierungsmustern mit einem Drucker. Ein Scanner wird verwendet, um die gedruckten Kalibrierungsmuster zu messen. Anschließend werden die gemessenen mit den ursprünglichen Mustern verglichen und die Ergebnisse werden in einer LUT für eine Farbraumtransformation gespeichert. Es wird weiterhin bestimmt, ob der Vergleich eine Abweichung zeigt, die akzeptierbar ist oder nicht. Falls sie nicht akzeptierbar sind, werden diese nicht akzeptierbaren Bereiche identifiziert. Dieser nicht akzeptierbare Bereich wird verwendet, um neue Kalibrierungsmuster zu erzeugen. Falls die Vergleiche ausreichend zufrieden stellende Ergebnisse liefern, d.h., nur Abweichungen im akzeptablen Bereich, werden die Werte in der LUT gespeichert. Dieses iterative Verfeinerungsverfahren kann mehrfach hintereinander angewandt werden oder auch nur einmal. Die LUT wird verwendet, um geräteabhängige Werte in geräteunabhängige Druckersignale umzuwandeln.

### ZUSAMMENFASSUNG DER ERFINDUNG

Die Erfindung ist durch den Gegenstand des unabhängigen Anspruchs 1 definiert. Vorteilhafte Weiterbildungen sind Gegenstand der abhängigen Ansprüche.

### VORTEILE DER ERFINDUNG

Vorteilhaft wird insbesondere eine schnellere und weniger aufwändige Möglichkeit zur Linearisierung und Charakterisierung eines beliebigen bildgebenden Geräts, insbesondere beliebigen Druckers bereitgestellt. Speziell soll das erfindungsgemäße Verfahren ohne Qualitätseinbuße mit deutlich kleineren, d.h. deutlich weniger Messfelder aufweisenden Farbmesstafeln auskommen. Typisch sollen für RGB-Geräte (Drucker) etwa 45 und für CMYG-Geräte (Drucker) etwa 34 Farbmessfelder genügen.

Vorteilhaft werden Methoden zur "intelligenten" Analyse der Leistung eines Druckers unter Einbeziehung von Druckkopf , Tinten und Druckmedium (Papier) auf der Grundlage der genannten schnellen Linearisierung und Charakterisierung bereitgestellt.

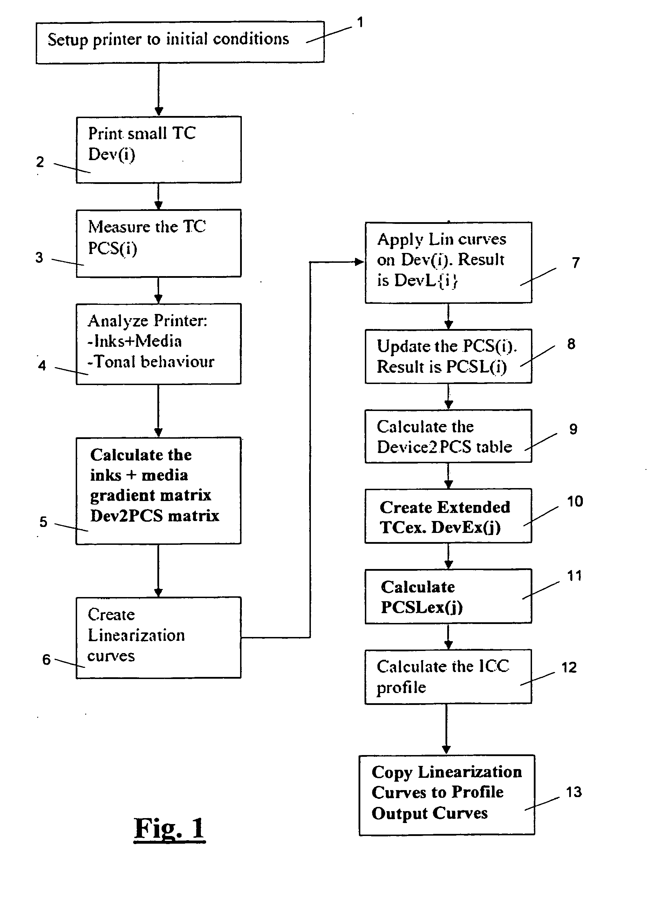

Im Folgenden wird die Erfindung anhand der Zeichnung beispielsweise im Zusammenhang mit einem Drucker näher erläutert. Die einzige Figur zeigt ein Flussdiagramm der wichtigsten Schritte des erfindungsgemäßen Verfahrens.

Wie in der Figur durch den Block 1 symbolisiert ist, wird von einem standardmäßig voreingestellten Drucker (Setup mit Default-Einstellungen) ausgegangen.

Für das erfindungsgemäße Verfahren wird eine vordefinierte, im Folgenden auch als Test Chart bezeichnete Farbmesstafel TC eingesetzt mit 45 Farbmessfeldern für RGB-Drucker bzw. 34 Farbmessfeldern für CMYK-Drucker. Die Test Chart ist definiert durch die Gerätefarbwerte Dev(i) für jedes der im Folgenden auch als Color Patches bezeichneten, typischerweise quadratischen Farbmessfelder. Der Index i steht dabei für je eines der Farbmessfelder und läuft von 1 bis Anzahl Farbmessfelder in der Farbmesstafel, also 1 ... i ... numofTCpatches, wobei numofTCpatches für RGB-Geräte beispielsweise 45 und für CMYK-Geräte beispielsweise 34 beträgt. Die Farbmessfelder repräsentieren die Hauptfarben (RGB bzw. CMYK) in einer entsprechend abgestuften Form (0, 25, 50,75, 100 %) sowie verschiedene Grautöne entlang der zentralen Achse des Farbraums.

In einem ersten Verfahrensschritt wird nun unter Verwendung der Gerätefarbwerte Dev(i) mit dem standardmäßig voreingestellten Drucker die Farbmesstafel ausgedruckt (Block 2).

Im nächsten Schritt wird die gedruckte Farbmesstafel mittels eines Spektralfotometers oder Farbmessgeräts farblich ausgemessen (Block 3). Das Messergebnis ist dabei für jedes Farbmessfeld ein Satz von Spektralwerten (z.B. 38 spektrale Energie-Werte über das sichtbare Spektrum von 380-760 nm) oder ein Satz von L,a,b-Farbwerten. Die gemessenen Spektralwerte oder Farbwerte für jedes Farbmessfeld i sind im Folgenden als PCS(i) bezeichnet, wobei i wiederum von 1 .... numofTCpatches läuft. Jedem Satz i von Gerätefarbwerten Dev(i) entspricht somit ein Satz i von gemessenen Spektral- oder Farbwerten PCS(i), der die Farbe des jeweiligen gedruckten Farbmessfelds i quantifiziert.

Hier und im folgenden steht "Dev" für "Gerät" bzw. "Device" und "PCS" für "Ausgabefarbraum" bzw. "Profil Connection Space".

Die Gesamtheit der Gerätefarbwerte Dev(i) und der gemessenen Farbwerte PCS(i) bildet eine das Bildgebungsverhalten des Geräts beschreibende Farbdatenbank, die in den nächsten beiden Verfahrensschritten (Blöcke 4 und 5) zur Gewinnung verschiedener Informationen analysiert und ausgewertet wird.

Eine erste Information betrifft den Status der eingesetzten Druckfarben, d.h. Aufschluss darüber, ob die Druckfarben innerhalb der definierten Spezifikationen liegen. Betrachtet werden dazu die gemessenen Farbwerte oder daraus berechneten Farbton-, Helligkeits- und Sättigungswerte (Hue, Luminance, Saturation) von Volltonfeldern der einzelnen Druckfarben in der Farbmesstafel TC. Wenn diese Werte außerhalb der vorgegebenen Spezifikationen liegen, wird das Verfahren abgebrochen oder eine entsprechende Meldung an den Benutzer ausgegeben.

Eine zweite Information betrifft den Linearisierungsstatus des Geräts, speziell Druckers, d.h. Aufschluss darüber, ob und in welchem Masse die Zusammenhänge zwischen Gerätefarbwerten und gemessenen Farbwerten für die einzelnen Druckfarben RBG bzw. CMYK linear verlaufen. Auch dazu können die Gerätefarbwerte und zugehörigen gemessenen Farbwerte von abgestuften einfärbigen Farbmessfeldern herangezogen werden.

Eine dritte Information betrifft das Verhalten des Geräts, speziell des Druckers, bei graduellen Änderungen der Druckfarben. Dieses Verhalten wird durch eine Gradientenmatrix Dev2PCS ausgedrückt, welche den differentiellen (graduellen) Zusammenhang zwischen Gerätefarbwerten Dev(i) und gemessenen Farbwerten PCS(i) beschreibt. Dabei wird diese Gradientenmatrix vorzugsweise für die Mitte des Farbraums bestimmt, und zwar aus den Gerätefarbwerten Dev(i) und zugehörigen Farbwerten PCS(i) von in der engeren Umgebung der Farbraummitte liegenden Farbmessfeldern der Farbmesstafel TC.

Im nächsten Schritt (Block 6) werden Linearisierungskurven LC für die im Drucker eingesetzten Druckfarben berechnet. Diese Linearisierungskurven LC beschreiben (tabellarisch) für jede Druckfarbe Korrekturwerte für die Gerätefarbwerte Dev(i), welche dazu führen, dass sich die Farbwerte PCS(i) linear zu den Gerätefarbwerten Dev(i) verhalten. (Bei einem ideal linearen Drucker wären diese Korrekturwerte natürlich alle null.) Auch für die Berechnung der Linearisierungskurven LC wird die genannte Farbdatenbank herangezogen. Praktisch wird dabei so vorgegangen, dass für jede Druckfarbe die Helligkeitswerte (L) der entsprechenden abgestuften einfarbigen Farbmessfelder analysiert werden. Mittels einer polynomialen Spline-Funktion 3. Ordnung und anschliessender Diskretisierung in z.B. 100 Stützstellen werden die Linearisierungskurven LC dann aus den Gerätefarbwerten Dev(i) und den L-Werten der zugehörigen Farbwerte PCS(i) berechnet und tabellarisch abgelegt.

Im darauffolgenden Schritt (Block 7) werden diese Linearisierungskurven LC auf die Gerätefarbwerte Dev(i) angewandt, d.h. die Gerätefarbwerte Dev(i) werden mittels der Linearisierungskurven LC korrigiert. Die korrigierten Gerätefarbwerte werden im folgenden als linearisierte Gerätefarbwerte DevL(i) bezeichnet, die Gesamtheit der linearisierten Gerätefarbwerte DevL(i) stellt eine linearisierte Farbmesstafel TCL dar.

Im nächsten Schritt (Block 8) werden linearisierte Farbwerte PCSL(i) berechnet. Diese Berechnung entspricht einer mathematischen Nachbildung (Modellierung) des realen Drucks der linearisierten Farbmesstafel TCL, wobei also anstelle der ursprünglichen Gerätefarbwerte Dev(i) die linearisierten Gerätefarbwerte DevL(i) als Farbsteuerwerte für den Drucker verwendet und die im Druck zu erwartenden linearisierten Farbwerte PCSL(i) vorausberechnet werden. Diese Vorausberechnung kann anhand eines mathematischen Modells erfolgen, welches das Bildgebungsverhalten des Druckers beschreibt. Ein wesentlicher Bestandteil eines geeigneten Modells ist dabei die schon erwähnte Gradientenmatrix Dev2PCS. Ferner können auch Druckfarbenformulierungsmethoden mit einbezogen werden.

Aus den jetzt vorliegenden linearisierten Gerätefarbwerten DevL(i) und linearisierten Farbwerten PCSL(i) wird nun im nächsten Schritt (Block 9) mittels Interpolation und Druckfarbenformulierung und unter Zuhilfenahme der Gradientenmatrix Dev2PCS eine Konversionstabelle Device2PCS berechnet, welche den (linearisierten) Gerätefarbraum Dev mit dem Ausgabefarbraum PCS verbindet, wobei jedem Gerätefarbwertsatz RGB bzw. CMYK ein Ausgabefarbwertsatz Lab entspricht und die Konversionstabelle möglichst den gesamten druckbaren Farbraum abdeckt.

Im nächsten Schritt (Block 10) wird anhand der Konversionstabelle Device2PCS durch Interpolation eine erweiterte Farbmesstafel TCex berechnet, die eine gegenüber der ursprünglichen Anzahl wesentlich grössere Anzahl von Farbmessfeldern umfasst. Die Gerätefarbwerte dieser erweiterten Farbmesstafel TCex sind mit DevEx(j) bezeichnet, wobei j von 1 bis NumOfExtendedPatches läuft und NumOfExtendedPatches die Anzahl der insgesamt vorzusehenden (ursprünglichen und erweiterten) Farbmessfelder bedeutet.

Im folgenden Schritt (Block 11) werden ebenfalls anhand der Konversionstabelle Device2PCS zu den erweiterten Gerätefarbwerten (DevEx(j) ggf. durch Interpolation entsprechende erweiterte Farbwerte PCSLex(j) berechnet. Diese entsprechend den zu erwartenden Farbmesswerten, wenn die erweiterte Farbmesstafel TCex gedruckt würde.

Aus den erweiterten Gerätefarbwerten DevEx(j) und den dazugehörigen erweiterten Farbwerten PCSex(j) wird dann im Schritt (Block 12) in an sich bekannter Weise mittels einer handelsüblichen Profilerstellungssoftware ein ICC Geräteprofil P berechnet.

Im letzten Schritt (Block 13) werden schliesslich die Linearisierungskurven LC in an sich bekannter Weise in das Geräteprofil integriert, d.h. die Linearisierungskurven LC werden gemäss den Normen des ICC an die Output Kurven der sog. B2A Tabellen des Profils P angehängt.

## Patentansprüche

1. Verfahren zur Linearisierung und Charakterisierung eines bildgebenden Geräts, speziell eines Druckers, wobei mit dem Gerät eine aus einer Anzahl von Farbmessfeldern mit definierten Gerätefarbwerten bestehende Farbmesstafel reproduziert wird, die reproduzierte Farbmesstafel farblich ausgemessen wird und dabei für jedes Farbmessfeld zugehörige Farbwerte ermittelt werden, und wobei aus den Gerätefarbwerten und den ermittelten Farbwerten ein Profil für das Gerät berechnet wird, **dadurch gekennzeichnet, dass** eine Farbmesstafel (TC) mit einer verhältnismäßig geringen Anzahl, d.h. etwa 34 oder 45 Farbmessfelder, von Farbmessfeldern verwendet, reproduziert und farblich ausgemessen wird, dass aufgrund der Gerätefarbwerte (Dev(i)) und der gemessenen Farbwerte (PCS(i)) der Farbtafel (TC) Linearisierungskurven (LC) für das Gerät berechnet werden, dass aufgrund der Linearisierungskurven (LC), der Gerätefarbwerte (Dev(i)) und der gemessenen Farbwerte (PCS(i)) der Farbtafel (TC) eine erweiterte Farbmesstafel (TCex) mit erweiterten Gerätefarbwerten (DevEx(j)) und zugehörigen erweiterten Farbwerten (PCSLex(j)) berechnet wird, wobei aus den Gerätefarbwerten (Dev(i)) und den zugehörigen gemessenen Farbwerten (PCS(i)) eine Gradientenmatrix (Dev2PCS) berechnet wird, welche den differentiellen Zusammenhang zwischen Gerätefarbwerten und gemessenen Farbwerten vorzugsweise in der Umgebung der Farbraummitte beschreibt, wobei diese Gradientenmatrix (Dev2PCS) für eine Modellierung des Geräts, insbesondere für die Berechnung einer Konversionstabelle (Device2PCS) verwendet wird, wobei die Anzahl der Farbmessfelder in der erweiterten Farbmesstafel (TCex) signifikant grösser ist als die Anzahl der Farbmessfelder in der ursprünglichen Farbmesstafel (TC), und dass das Profil für das Gerät aus den erweiterten Gerätefarbwerten (DevEx(j)) und den erweiterten Farbwerten (PCSLex(j)) berechnet wird.

2. Verfahren nach Anspruch 1, **dadurch gekennzeichnet, dass** aufgrund der Gerätefarbwerte (Dev(i)) und der gemessenen Farbwerte (PCS(i)) der Farbtafel (TC) eine linearisierte Farbtafel (TCL) mit linearisierten Gerätefarbwerten (DevL(i)) sowie durch Modellierung des Geräts entsprechende linearisierte Farbwerte (PCSL(i)) berechnet werden, dass aus den linearisierten Gerätefarbwerten (DevL(i)) und linearisierten Farbwerten (PCSL(i)) eine Konversionstabelle (Device2PCS) berechnet wird, welche den Zusammenhang zwischen linearisierten Gerätefarbwerten (DevL(i)) und linearisierten Farbwerten (PCSL(i)) tabellarisch darstellt, und dass die erweiterte Farbmesstafel (TCex) anhand der Konversionstabelle (Device2PCS) mit den erweiterten Gerätefarbwerten (DevEx(j)) und den zugehörigen erweiterten Farbwerten (PCSLex(j)) berechnet wird.

3. Verfahren nach einem der vorangehenden Ansprüche, **dadurch gekennzeichnet, dass** die Linearisierungskurven (LC) in die Ausgangskurven des Profils (P) integriert werden.

## Claims

1. A method for linearising and characterising an imaging-producing device, specifically a printer, wherein: using the device, a colour test chart is reproduced which consists of a number of colour measurement fields having defined device colour values; the reproduced colour test chart is measured in terms of colour, wherein colour values associated with each colour measurement field are determined; and a profile for the device is calculated from the device colour values and the determined colour values; **characterised in that**: a colour test chart (TC) comprising a relatively low number of colour measurement fields, i.e. about 34 or 45 colour measurement fields, is used, reproduced and measured in terms of colour; on the basis of the device colour values (Dev(i)) and the measured colour values (PCS(i)) of the colour chart (TC), linearisation curves (LC) for the device are calculated; on the basis of the linearisation curves (LC), the device colour values (Dev(i)) and the measured colour values (PCS(i)) of the colour chart (TC), an expanded colour test chart (TCex) comprising expanded device colour values (DevEx(j)) and associated expanded colour values (PCSLex(j)) is calculated, wherein a gradient matrix (Dev2PCS) is calculated from the device colour values (Dev(i)) and the associated measured colour values (PCS(i)), said gradient matrix describing the differential relationship between the device colour values and the measured colour values, preferably in the vicinity of the centre of the colour space, wherein this gradient matrix (Dev2PCS) is used for modelling the device, in particular for calculating a conversion table (Device2PCS), wherein the number of colour measurement fields in the expanded colour test chart (TCex) is significantly larger than the number of colour measurement fields in the original colour test chart (TC), and **in that** the profile for the device is calculated from the expanded device colour values (DevEx(j)) and the expanded colour values (PCSLex(j)).

2. The method according to claim 1, **characterised in that**: a linearised colour chart (TCL) comprising linearised device colour values (DevL(i)) is calculated on the basis of the device colour values (Dev(i)) and the measured colour values (PCS(i)) of the colour chart (TC), and corresponding linearised colour values (PCSL(i)) are calculated by modelling the device; a conversion table (Device2PCS) is calculated from the linearised device colour values (DevL(i)) and the linearised colour values (PCSL(i)), said conversion table representing in table form the relationship between the linearised device colour values (DevL(i)) and the linearised colour values (PCSL(i)); and the expanded colour test chart (TCex) is calculated by way of the conversion table (Device2PCS) comprising the expanded device colour values (DevEx(j)) and the associated expanded colour values (PCSLex(j)).

3. The method according to any one of the preceding claims, **characterised in that** the linearisation curves (LC) are integrated into the output curves of the profile (P).

## Revendications

1. Procédé de linéarisation et de caractérisation d'un appareil générateur d'images, notamment d'une imprimante, l'appareil permettant de reproduire un tableau de mesure de couleur constitué d'un certain nombre de champs de mesure de couleur avec des valeurs chromatiques d'appareil définies, lequel tableau de mesure de couleur reproduit étant mesuré au niveau des couleurs et des valeurs chromatiques spécifiques pour chaque champ de mesure étant déterminées, un profil pour l'appareil étant calculé à partir des valeurs chromatiques d'appareil et des valeurs chromatiques déterminées, **caractérisé en ce qu'**un tableau de mesure de couleur (TC) est utilisé avec un nombre relativement faible, c'est-à-dire environ 34 ou 45 champs de mesure de couleur, est reproduit et mesuré au niveau des couleurs de telle sorte que, sur la base des valeurs chromatiques d'appareil (Dev(i)) et des valeurs chromatiques (PCS(i)) mesurées du tableau de couleur (TC), des courbes de linéarisation (LC) sont calculées pour l'appareil, que, sur la base des courbes de linéarisation (LC), des valeurs chromatiques d'appareil (Dev(i)) et des valeurs chromatiques mesurées (PCS(i)) du tableau de couleur (TC), on calcule un tableau de mesure de couleur (TCex) élargie avec des valeurs chromatiques d'appareil (DevEx(j)) étendues et des valeurs chromatiques (PCSLex(j)) élargies et spécifiques, une matrice de gradient (Dev2PCS) étant calculée à partir des valeurs chromatiques d'appareil (Dev(i)) et des valeurs chromatiques (PCS(i)) mesurées et spécifiques, laquelle matrice décrit la corrélation différentielle entre des valeurs chromatiques d'appareil et des valeurs chromatiques mesurées de préférence dans l'environnement du centre d'espace de couleur, cette matrice de gradient (Dev2PCS) étant utilisée pour une modélisation de l'appareil, en particulier pour le calcul d'un tableau de conversion (Device2PCS), le nombre des champs de mesure de couleur dans le tableau de mesure de couleur (TCex) élargi étant sensiblement plus grand que le nombre des champs de mesure de couleur dans le tableau de mesure de couleur (TC) initial, et **en ce que** le profil pour l'appareil est calculé à partir des valeurs chromatiques d'appareil (DevEx(j)) élargies et des valeurs chromatiques (PCSLex(j)) élargies.

2. Procédé selon la revendication 1, **caractérisé en ce que**, sur la base des valeurs chromatiques d'appareil (Dev(i)) et des valeurs chromatiques (PCS(i)) mesurées du tableau de couleur (TC), on calcule un tableau de couleur (TCL) linéarisé avec des valeurs chromatiques d'appareil (DevL(i)) linéarisées et par modélisation de l'appareil des valeurs chromatiques (PCSL(i)) linéarisées correspondantes, **en ce que**, à partir des valeurs chromatiques d'appareil (DevL(i)) linéarisées et des valeurs chromatiques (PCSL(i)) linéarisées, on calcule un tableau de conversion (Device2PCS), qui représente sous forme de tableau la corrélation entre des valeurs chromatiques d'appareil (DevL(i)) linéarisées et des valeurs chromatiques (PCSL(i)) linéarisées, et **en ce que** le tableau de mesure de couleur (TCex) élargi est calculé à l'aide du tableau de conversion (Device2PCS) avec les valeurs chromatiques d'appareil (DevEx(j)) élargies et les valeurs chromatiques (PCSLex(j)) élargies et spécifiques.

3. Procédé selon l'une quelconque des revendications précédentes, **caractérisé en ce que** les courbes de linéarisation (LC) sont intégrées dans les courbes de départ du profil (P).
